# FASCICULE DE BREVET EUROPEEN

(11) **EP 2 936 139 B1**
(45) Date de publication et mention de la délivrance du brevet: **05.06.2019**
(21) Numéro de dépôt: 13805911.8
(22) Date de dépôt: 17.12.2013
(51) Int. Cl.: G01N 29/11, G01N 29/30, G01N 29/44

(54) **MÉTHODE D'AUTO-CALIBRATION POUR LE CONTRÔLE PAR ULTRASONS, EN COURS DE FABRICATION, D'UNE STRUCTURE EN MATÉRIAU COMPOSITE**
SELBSTKALIBRIERUNGSVERFAHREN ZUR ULTRASCHALLKONTROLLE EINER KOMPOSITSTRUKTUR WÄHREND DER HERSTELLUNG
AUTO-CALIBRATION METHOD FOR ULTRASONIC CONTROL OF A COMPOSITE STRUCTURE DURING FABRICATION

(30) Priorité: 21.12.2012 FR 1262545
(43) Date de publication de la demande: 28.10.2015
(73) Titulaire: AIRBUS (SAS), 31700 Blagnac (FR)
(72) Inventeur: AUFFRAY, Stéphane, F-44410 Saint Lyphard (FR); VOILLAUME, Hubert, F-92130 Issy Les Moulineaux (FR)
(74) Mandataire: Gicquel, Olivier Yves Gérard
(86) Numéro de dépôt international: PCT/EP2013/076901
(87) Numéro de publication internationale: WO 2014/095863

(56) Documents cités:
- FR-A1- 2 930 344
- US-A- 5 163 027
- US-A1- 2007 101 815

## Description

### DOMAINE DE L'INVENTION

L'invention se rapporte au domaine général de la fabrication de pièces en matériaux composites et plus spécifiquement de pièces en matériaux composites à matrice en résine et renforts fibreux. Elle se rapporte plus particulièrement au contrôle de telles structures au cours du processus de fabrication.

### CONTEXTE DE L'INVENTION - ART ANTERIEUR

Le processus de fabrication de pièces en matériaux composites comporte généralement différentes étapes qui se succèdent temporellement, chaque étape devant être exécutée à une pression et une température déterminées qui peuvent être différentes d'une étape à l'autre.

Par suite si l'on veut contrôler de manière efficace la qualité d'exécution d'une étape donnée, c'est-à-dire la qualité du produit à chacune des étapes qui conduisent au matériau fini, il est nécessaire de prendre en compte ces paramètres de température et de pression. Ceci est particulièrement vrai lorsque le contrôle se fait par ultra-sons dans la mesure où la température et la pression ambiante influent sur la réponse (sensibilité) des capteurs ultrasonores utilisés.

On rappelle ici que l'utilisation de capteurs ultrasonores permet avantageusement d'assurer diverses fonctions de contrôle telles que:
- La caractérisation de la préforme fibreuse formée par l'écoulement d'une résine injectée dans un renfort fibreux (matrice résine/renfort fibreux);
- La détermination de l'avancée de la polymérisation de la résine au cours du cycle de polymérisation proprement dit ;
- La détermination du taux volumique de fibre et / ou du taux de porosité local.

En particulier les techniques ultrasonores sont les seules techniques d'analyse en profondeur qui permettent de contrôler de façon efficace l'absence de porosité du matériau fabriqué.

La demande de brevet Français FR 2 930 344 décrit un procédé non-destructif d'évaluation d'un niveau de porosité d'une pièce en matériau composite au cours du processus de fabrication.

Cependant le contrôle par ultrasons est peu utilisé, de façon dite "in-situ" tout au moins, dans la mesure où les mesures obtenues à l'aide de capteurs ultrasonores sont difficiles à exploiter du fait même de la variabilité de leur sensibilité en fonction de la température et de la pression, grandeurs essentiellement variables dans le contexte de la fabrication de pièces en matériaux composites.

C'est pourquoi on utilise généralement des procédés alternatifs basés par exemple sur des techniques de diélectométrie (mesures de résistance d'isolement), de diffusion optique ou encore des systèmes mettant en oeuvre des fibres optiques à réseaux de Bragg. Cependant de tels procédés ne permettent que des contrôles ponctuels non volumiques, à l'endroit où ils sont positionnés, en surface ou à l'intérieur de la pièce.

En outre, même lorsque des capteurs ultrasonores sont utilisés, on limite généralement leur emploi à des mesures de temps de propagation des ondes ultrasonores dans le milieu analysé (i.e. la pièce en cours de fabrication), l'analyse des amplitudes n'étant, en particulier, pas considérée.

### PRESENTATION DE L'INVENTION

Un but de l'invention est de proposer une solution permettant d'utiliser des capteurs ultrasonores pour le contrôle de pièces en matériau composite aux différentes étapes de leur fabrication, solution permettant d'utiliser des capteurs ultrasonores pour réaliser à la fois des mesures de temps de propagation et des mesures d'amplitude, et ce, malgré les variations de température et de pression qui peuvent être infligées aux capteurs.

A cet effet l'invention a pour objet un dispositif d'auto-calibration d'un ensemble de capteurs ultrasonores destinés au contrôle de la structure d'une pièce en matériau composite au cours de sa fabrication selon la revendication 1.

Selon diverses dispositions ou propriétés, éventuellement utilisées en conjonction le dispositif selon l'invention peut en outre présenter les caractéristiques additionnelles qui suivent.

Selon un mode de réalisation, le dispositif comporte en outre des moyens pour appliquer à chacun des capteurs de mesure une commande de gain dont la valeur est fonction de la valeur de la commande de gain déterminée pour le capteur de référence de même type que le capteur de mesure considéré.

Selon un autre mode de réalisation, le dispositif comporte en outre des moyens pour appliquer à chacun des capteurs de mesure une commande de gain dont la valeur est sensiblement égale à la valeur de la commande de gain déterminée pour le capteur de référence de même type que le capteur de mesure considéré.

Selon un autre mode de réalisation, les cales sont réalisées dans un matériau composite identique à celui formant la pièce contrôlée.

Selon un autre mode de réalisation, alternatif au précédent, les cales sont réalisées en carbure de silicium ou acier.

Selon un autre mode de réalisation, chaque capteur ultrasonore de référence est monté sur une cale séparée.

L'invention a également pour objet un procédé d'auto-calibration d'un ensemble de capteurs ultrasonores destinés au contrôle de la structure d'une pièce en matériau composite au cours de sa fabrication. Ce procédé met en oeuvre le dispositif selon l'invention pour implémenter les étapes suivantes :
- une première étape durant laquelle on applique sur un capteur de référence un signal d'excitation de façon à lui faire émettre une onde ultrasonore dans la cale de référence sur laquelle il est monté et on mesure l'amplitude de l'écho de référence reçu par ce capteur ;
- une seconde étape durant laquelle on détermine la valeur de la commande de gain à appliquer à ce capteur pour obtenir un signal de référence d'une valeur d'amplitude sensiblement égale à une valeur de consigne ;
- une troisième étape durant laquelle on affecte aux capteurs de mesure de même type que le capteur de référence considéré la commande de gain déterminée à l'étape précédente ;

Cette séquence de trois étapes étant exécutée, pour chacun des capteurs de référence, au moins une fois pour chaque cycle (température, pression) du processus de fabrication de la pièce en matériau composite.

Le procédé selon l'invention permet ainsi avantageusement de s'affranchir de l'influence de la température sur la réponse (sensibilité) des capteurs ultrasonores utilisés pour assurer le contrôle.

Il peut s'appliquer à tout moyen de contrôle par ultrason utilisé dans un environnement dont la variabilité au cours du temps (en température, hygrométrie, salinité, pression, etc....) peut affecter la sensibilité des capteurs.

### DESCRIPTION DES FIGURES

Les caractéristiques et avantages de l'invention seront mieux appréciés grâce à la description qui suit, description qui s'appuie sur les figures annexées qui présentent:
- la figure1, l'illustration relative à la réalisation d'une pièce en matériau composite conformément au procédé dit "LRI" ("LRI" étant l'acronyme de la dénomination anglo-saxonne "Liquid Resin Infusion").
La figure 2, une illustration schématique permettant de décrire le principe de l'invention ;
- la figure 3, un organigramme de principe du procédé d'auto-calibration selon l'invention ;
- la figure 4, une représentation schématique d'une forme de mise en oeuvre du procédé d'auto-calibration selon l'invention dans le cadre du procédé LRI illustré par la figure 1.

### DESCRIPTION DETAILLEE

Dans la suite du texte le procédé selon l'invention est décrit au travers de son application au contrôle d'une structure en matériau composite réalisée conformément au procédé LRI. Cet exemple de mise en oeuvre est présenté à titre d'exemple non limitatif dans le but exclusif de présenter de manière simple et claire les caractéristiques et avantages du procédé selon l'invention.

Le procédé LRI permet la fabrication de pièces en matériau composite, à basse pression sous vide. Conformément à ce procédé, une préforme textile 11, sèche, est déposée dans un moule 12 sous un environnement constitué de tissus de drainage 18, d'arrachage 171, 172 et d'une ou plusieurs membranes 151, 152. La calibration en épaisseur et en planéité de la pièce à fabriquer est assurée par une plaque métallique perforée 14 couvrant la préforme, ou "caul-plate" selon la dénomination anglo-saxonne.

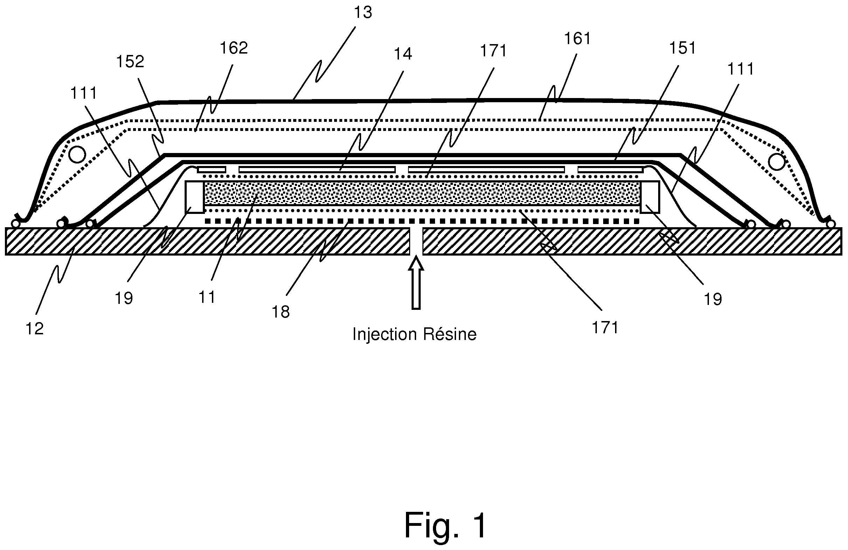

Le procédé d'injection lui-même consiste, de manière connue, à injecter une résine dans le moule, comme illustré par la figure 1, de façon à imprégner la préforme 11, puis à chauffer résine et préforme de façon à assurer la polymérisation de la résine. La température de chauffage, ainsi que la pression à l'intérieur du moule varient au cours de la fabrication selon un cycle donné déterminé de façon à obtenir une pièce ayant les caractéristiques structurelles voulues.

Au cours de la phase de fabrication, la résine injectée dans la préforme fibreuse 11 voit ainsi son état évoluer sous l'effet combiné de la température et de la pression, jusqu'à atteindre un état de polymérisation. La pièce en matériau composite 11 ainsi formée présente alors une structure rigide.

Durant la phase de réalisation de la pièce 11 (i.e. de polymérisation de la résine) il est généralement intéressant de connaitre le degré d'avancement de la polymérisation de façon à s'assurer de la maîtrise du procédé. De même il est intéressant de pouvoir vérifier, au cours même de la fabrication, l'état la santé de la pièce c'est-à-dire l'intégrité structurelle de cette pièce, en vérifiant notamment l'absence de bulles susceptibles de conférer une porosité indésirable à la pièce, et l'absence de perte de cohésion entre les plis formant l'âme de la pièce, perte de cohésion qui se traduit par un délaminage de la pièce.

C'est pourquoi on place généralement des capteurs de mesure des capteurs ultrasonores en particulier, au voisinage de la pièce 11 en cours de fabrication de façon à réaliser une exploration par ultrasons de la structure interne de la pièce aux différents stades de la réalisation, c'est-à-dire pour les différents cycles (température, pression) que subit la pièce 11.

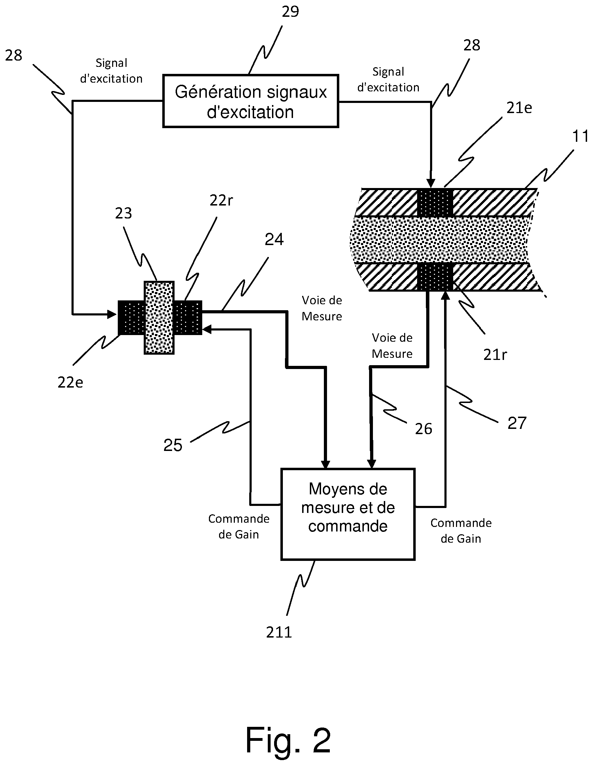

De manière connue, selon le principe d'analyse considéré, analyse en transmission ou en réflexion, les capteurs de mesure 21 sont agencés soit au voisinage de chacune des faces de la pièce à fabriquer, comme illustré par la figure 2, une face étant équipée de dispositifs émetteurs d'ultrasons 21e et l'autre face de dispositif récepteurs 21r ; soit, alternativement, sur une seule face les dispositifs utilisés étant alors à la fois émetteurs et récepteurs.

Ainsi, dans la configuration illustrée par la figure 2, l'analyse par ultrasons peut par exemple être réalisée utilisant des capteurs ultrasonores 21 comportant chacun un émetteurs 21e, intégré à la "caul-plate" 14, ces dispositifs étant répartis de façon déterminée à la surface de cette dernière et agencés de façon à ce que leur faces émettrices soient en regard de la préforme 11, et un récepteur 21r, intégré au moule 12 et positionné en vis-à-vis du dispositif émetteurs du même capteur, sa face réceptrice étant positionnée en regard de la préforme 11. La demande de brevet Français portant la référence FR1258703 déposée par la demanderesse décrit de manière détaillée un tel agencement.

Un tel agencement de capteurs permet de réaliser un contrôle par ultrasons des changements d'état de la pièce 11 en cours de fabrication (réticulation par exemple) par mesure des temps de propagation des ondes sonores émises dans le matériau notamment, mais également par mesure de l'affaiblissement subi par les ondes ultrasonores traversant le matériau, mesure qui permet de déterminer sa structure interne.

Cependant cette mesure d'affaiblissement est rendue délicate par le fait que la sensibilité des capteurs à ultrasons 21 est variable en fonction de la température et de la pression. Or, par principe, le milieu dans lequel sont placés ces capteurs, autrement dit l'enceinte dans laquelle est réalisée la fabrication (i.e. le moulage) de la pièce considérée, subit des variations de température et de pression au cours des différentes étapes de fabrication.

Par suite la sensibilité des capteurs variant au cours des différentes étapes, l'exploitation des mesures d'atténuation des ondes ultrasonores dans le matériau en cours de fabrication, obtenues pour les différents cycles de fabrication à l'aide des capteurs disposés en regard de la préforme 11, est généralement délicate.

Dans le but de résoudre cette difficulté l'invention propose la mise en oeuvre d'une auto-calibration permettant à tout instant de corriger les variations de sensibilité des capteurs à ultrasons de façon à être en mesure de disposer de mesures d'atténuation indépendantes des variations de température et de pression. Le dispositif permettant de réaliser cette auto-calibration est illustré par la représentation schématique de la figure 2.

Comme l'illustre la figure 2, le procédé selon l'invention propose de mettre en place un dispositif comportant un ou plusieurs capteurs de référence, selon que les capteurs à ultrasons mis en oeuvre pour le contrôle de la pièce en cours de réalisation sont des capteurs d'un même type ou au contraire des capteurs de types différents. Dans ce second cas, le dispositif selon l'invention comporte un capteur de référence pour chaque type de capteur utilisé.

Selon l'invention, chaque capteur de référence 22 est monté sur une structure témoin ou cale de référence 23 l'ensemble étant placé dans le même environnement que la pièce 11 en cours de fabrication.

Cette cale de référence 23 est préférentiellement réalisée dans un matériau présentant une structure telle que l'atténuation des ondes sonores traversant cette cale est invariante dans la gamme de températures et de pressions considérée ou, pour le moins telle que la variation de l'atténuation des ondes en fonction de la température et de la pression est connue. A cet effet, on peut par exemple utiliser une cale en carbure de silicium ou acier dont les caractéristiques mécaniques, le module d'Young en particulier, varient peu sur la plage de température considérée, de 20°C à 200°C typiquement (Variations du module d'Young inférieure à 10%).

Par ailleurs, les dimensions de cette cale sont définies en fonction de la largeur du capteur ultrasonore, de façon, en particulier, à induire un temps de propagation suffisant pour bien séparer les échos en cas de réflexions multiples. Préférentiellement on choisit des cales dont les dimensions sont typiquement de 50mm de longueur, 50mm de largeur et de 5mm d'épaisseur. Les capteurs étant disposés sur les faces de 50mm x 50mm, l'épaisseur traversée par l'onde ultrasonore est ainsi égale à 5mm.

Il est à noter que, connaissant ces caractéristiques d'atténuation, l'amplitude de l'onde ultrasonore émise étant considérée comme constante, on peut déterminer les variations du gain en réception présenté par le capteur ultrasonore de référence 22 monté sur la cale de référence 23 considérée, cette variation étant notamment fonction des variations de température et de pression auxquelles est exposé ce capteur. Cette variation peut, par suite, être compensée en modifiant en conséquence la valeur de la commande de gain 25 appliquée au récepteur 221 du capteur de référence 22, de façon à obtenir en sortie 26 de ce capteur un signal ayant un niveau constant donné.

La valeur modifiée, g', de la commande de gain 25 ainsi déterminée peut ensuite avantageusement être utilisée pour modifier, en phase de mesure, le gain des récepteurs 212 des capteurs de mesure 21 de même type que le capteur de référence 22 considéré de façon à compenser les variations du gain en réception de ces capteurs de mesure. En effet ces capteurs 21 étant de même type que le capteur de référence 22 et étant placés dans un même environnement, la variation du gain de ces capteurs est sensiblement identique à celle du gain du capteur de référence 22, de sorte que cette variation peut avantageusement être corrigée en appliquant aux récepteurs des capteurs de mesure 21, une commande de gain 27 de valeur égale à g'.

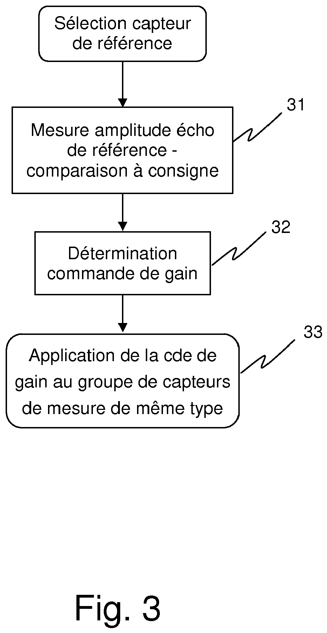

Par suite, le procédé d'auto-calibration selon l'invention met à profit la détermination de cette variation de gain pour réaliser la calibration des capteurs de mesure 21 qui réalisent, en cours de fabrication, le contrôle de la pièce en matériau composite considérée. Comme l'illustre la figure 3, le procédé de calibration selon l'invention implémente à cet effet les étapes suivantes:
- une première étape 31 durant laquelle, dans un premier temps, on applique à l'émetteur 22e du capteur de référence 22 considéré, le signal électrique d'excitation 28 délivré par un générateur de signaux 29, de telle façon que celui-ci émette une onde ultrasonore, d'amplitude donnée, au travers de la cale 23 sur laquelle il est monté, puis durant laquelle on mesure, dans un deuxième temps, l'amplitude du signal de mesure 24 correspondant à l'écho ultrasonore de référence reçu par le récepteur 22r du capteur de référence 22, cet écho correspondant à l'onde ultrasonore émise, après sa traversée de la cale 23.
- une deuxième étape 32 durant laquelle on détermine la valeur, g', de la commande de gain 25 à appliquer au récepteur 22r dudit capteur de référence 22 pour que l'amplitude du signal de mesure 24 ait une valeur sensiblement égale à une valeur de consigne déterminée par ailleurs. Cette étape est par exemple implémentée par des moyens de mesure et de commande 211 qui mesurent l'amplitude du signal transmis 24, 26, par chaque capteur (capteur de mesure ou capteur de référence) et contrôle séparément la commande de gain 25, 27, appliquée à chaque capteur.

La détermination de cette valeur est par exemple réalisée par itération. A chaque itération on applique une commande de gain 25 d'une valeur donnée sur le capteur de référence 22 et on détermine le niveau du signal de mesure fourni par le récepteur 22r de ce capteur, cette opération étant réitérée jusqu'à ce que la valeur, g', de la commande de gain 25 permette d'obtenir un signal de mesure 24 dont la valeur est sensiblement égale à la valeur de consigne.

Cette valeur de consigne est généralement fixée de façon à ce que le signal de mesure 24 correspondant à l'écho de référence présente un niveau nettement supérieur au niveau du bruit sans entrainer la saturation du capteur.
- une troisième étape 33 durant laquelle on modifie la valeur de la commande de gain 27 à appliquer aux récepteurs 21r des capteurs de mesure 21 de façon à la rendre égale à la valeur de la commande de gain 25 déterminée au cours de la deuxième étape.

Selon l'invention, cette succession de trois étapes est exécutée pour le capteur de référence considéré, de préférence au moins une fois pour chaque étape de la fabrication de la pièce 11 qui implique un changement de la valeur de la température et/ou de la pression. De la sorte pour chaque étape on est en mesure d'ajuster la commande de gain 27 des différents capteurs de mesure 21 de façon à optimiser le niveau de l'écho détecté par chaque capteur.

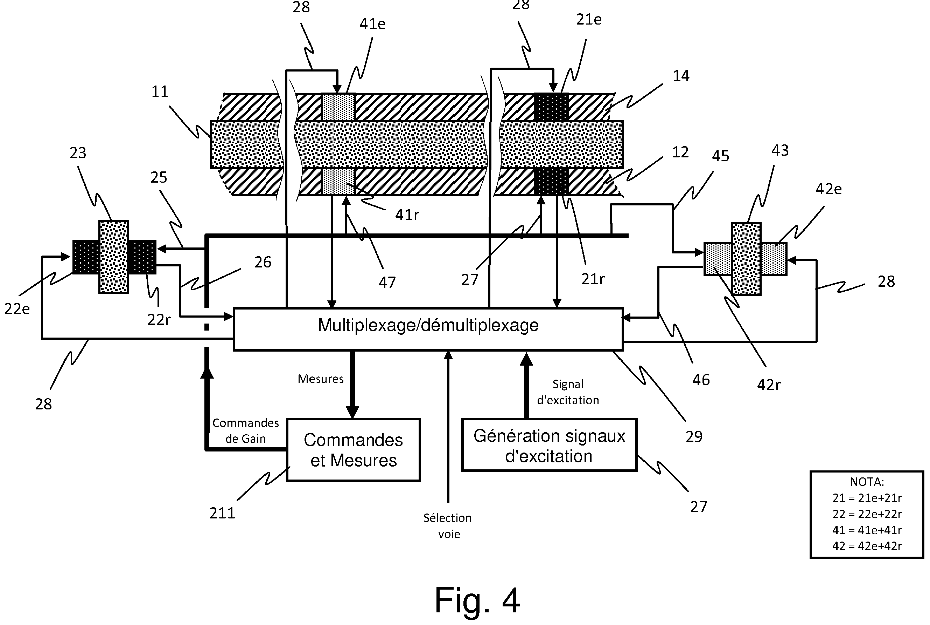

Il est à noter que suivant la structure du système de test, les moyens mis en oeuvre pour piloter les différents capteurs (capteurs de mesure ou capteurs de référence) et réaliser les opérations de test et les opérations de calibration, peuvent être de nature variable. Ainsi il est possible de mettre en oeuvre des moyens capables de piloter simultanément tous les capteurs ou bien des moyens capables de piloter les différents capteurs les uns après les autres. L'exemple de mise en oeuvre illustré par la figure 4, correspond à un système de mesures configuré pour réaliser le pilotage des différents capteurs de manière séquentielle et non simultanément.

Dans cet exemple d'application, non limitatif de l'objet ou de la portée de l'invention présentée ici, le dispositif de mesures de la pièce 11 comporte deux types de capteurs de mesure 21 et 41, de sorte que le dispositif d'étalonnage selon l'invention comporte quant à lui deux capteurs d'étalonnage 22 et 42. Les moyens de mise en oeuvre des éléments du dispositif d'étalonnage selon l'invention sont par ailleurs ici complètement intégrés au système de mesure.

Par suite, en fonctionnement, les capteurs d'étalonnage et de mesure reçoivent tour à tour un signal d'excitation issu d'un générateur 29 ce signal étant délivré alternativement aux différents capteurs, capteurs de mesures 21, 41 ou capteurs de référence 22, 42, par l'intermédiaire d'un circuit multiplexeur/démultiplexeur 44 commandé par un organe de commande, le calculateur du système de test par exemple (non représenté sur la figure 4).

Dans une configuration telle que celle illustrée par la figure 4, Lorsqu'il est excité l'émetteur 21e, 41e, 22e ou 42e de chaque capteur émet une onde ultrasonore et le récepteur 21r, 41r, 22r ou 42r reçoit l'écho résultant de la propagation de l'onde émise à travers la pièce 11 ou la cale de référence, 23 ou 43.

Le signal de mesure correspondant est transmis aux moyens d'exploitation des mesures 211 par l'intermédiaire du circuit multiplexeur/démultiplexeur 44. Chaque capteur du système, reçoit en outre une commande de gain 25, 45, 27 ou 47, délivrée par les moyens de mesure 211, par l'intermédiaire du circuit multiplexeur/démultiplexeur 44.

Une telle structure, qui intègre le dispositif de calibration à l'ensemble du système de mesure, permet de piloter alternativement l'ensemble de capteurs de sorte qu'en ce qui concerne les mesures proprement dites celles-ci sont réalisées alternativement pour chacun des capteurs de mesure 21 ou 41.

De manière analogue, les opérations d'étalonnage sont réalisées en mettant successivement en oeuvre le capteur de référence 22 et le capteur de référence 42 et en implémentant pour chacun de ces capteurs le procédé d'étalonnage selon l'invention. Les valeurs des commandes de gain en réception 25, 45 ainsi déterminées en phase d'étalonnage pour les capteurs de référence, sont ensuite appliquées aux commandes de gain en réception des capteurs de mesure correspondants. Ainsi la valeur de la commande de gain 27 appliquée aux capteurs de mesure 21 de même type que le capteur d'étalonnage 22 est celle de la commande de gain 25 déterminée pour le capteur 22 après exécution de la procédure d'étalonnage. De même, la valeur de la commande de gain 47 appliquée aux capteurs de mesure 41 de même type que le capteur d'étalonnage 42 est celle de la commande de gain 45 déterminée pour le capteur 42 après exécution de la procédure d'étalonnage.

Il est à noter que, dans la mesure où dans le cas illustré par la figure 2 le dispositif d'étalonnage selon l'invention est dans une large mesure intégré au système de test global chargé de la mise en oeuvre des capteurs de test 21 et 41, et de l'exploitation des mesures récupérées par les moyens de mesure et de commande 211, c'est le calculateur général du système de test, non représenté ici, qui implémente l'algorithme décrivant le procédé de calibration de chacun des capteurs de référence 22 et 42.

A cet effet, en phase d'étalonnage, il commande l'excitation d'un des capteurs de référence 22 ou 42, commande l'acquisition des mesures du signal de réception délivré par ce capteur en modifiant itérativement la valeur de gain appliquée audit capteur de référence de façon à déterminer la valeur de gain optimale. La phase d'étalonnage est exécutée successivement pour les différents capteurs de référence.

Par suite, en phase de mesure, il commande l'application de la valeur optimale de gain en réception déterminée pour chacun des capteurs de référence 22 ou 42 à chacun des capteurs de mesure 21 ou 41 de même type que le capteur de référence considéré.

Ainsi comme on peut le constater au travers de la description qui précède, grâce à la mise en oeuvre de moyens d'auto-calibration conformément à l'invention, les mesures réalisées sur une pièce en matériau composite durant sa fabrication, au moyen de capteurs ultrasonores, peuvent être sensiblement améliorées. En effet grâce aux opérations d'étalonnage réalisées en cours de fabrication, l'amplitude du signal analysé peut être maintenue à une valeur optimale et les variations d'amplitude du signal délivré par un capteur consécutives à une variation du gain propre en réception de ce capteur peuvent être supprimées, de sorte toute variation d'amplitude de ce signal peut être directement attribuée à une variation de structure de la pièce en cours de fabrication, en particulier à une variation de l'état viscoélastique de la résine, de la densité des fibres ou encore à la présence éventuelle de bulles ou de porosités.

## Revendications

1. Dispositif d'auto-calibration d'un ensemble de capteurs ultrasonores de mesures (21, 41) destinés au contrôle de la structure d'une pièce en matériau composite (11) au cours de sa fabrication, le dispositif comportant un ensemble de capteurs ultrasonores de référence (22, 42) placés à proximité de la pièce (11) dans le même environnement que cette dernière, chaque capteur de référence étant monté sur une cale de calibration (23, 43) et étant configuré pour être actionné de façon à réaliser une mesure d'amplitude d'un écho de référence constitué par une onde ultrasonore émise par le capteur et ayant traversé la cale (23, 43) sur laquelle le capteur de référence (22, 42) est monté, cet ensemble comportant au moins un capteur de référence de chacun des types de capteurs de mesures utilisés pour contrôler la structure de ladite pièce (11); **caractérisé en ce que** le dispositif comporte en outre des moyens configurés pour actionner chacun des capteurs de référence (22, 42) en des instants déterminés au cours du processus de fabrication de la pièce considérée, réaliser la mesure de l'amplitude de l'écho de référence reçu par ce capteur et déterminer la valeur de la commande de gain (25, 45) à appliquer à ce capteur pour maintenir l'amplitude de l'écho de référence à une valeur de consigne déterminée.

2. Dispositif selon la revendication 1, **caractérisé en ce qu'**il comporte en outre des moyens (211) configurés pour appliquer à chacun des capteurs de mesure (21, 41) une commande de gain (27, 47) dont la valeur est fonction de la valeur de la commande de gain (25, 45) déterminée pour le capteur de référence (22, 42) de même type que le capteur de mesure (21, 41) considéré.

3. Dispositif selon la revendication 2, **caractérisé en ce qu'**il comporte en outre des moyens configurés pour appliquer à chacun des capteurs de mesure (21, 41) une commande de gain (27, 47) dont la valeur est sensiblement égale à la valeur de la commande de gain (25, 45) déterminée pour le capteur de référence (22, 42) de même type que le capteur de mesure considéré.

4. Dispositif selon l'une quelconque des revendications précédentes, **caractérisé en ce que** les cales (23, 43) sont réalisées dans un matériau composite identique à celui formant la pièce (11) dont l'ensemble de capteurs de mesures (21, 41) réalise le contrôle.

5. Dispositif selon l'une quelconque des revendications 1 à 3, **caractérisé en ce que** les cales (23, 43) sont réalisées en carbure de silicium ou acier.

6. Dispositif selon l'une quelconque des revendications précédentes **caractérisé en ce que** chaque capteur ultrasonore de référence (22, 42) est monté sur une cale (23, 43) séparée.

7. Procédé d'auto-calibration d'un ensemble de capteurs ultrasonores destinés au contrôle de la structure d'une pièce en matériau composite (11) au cours de sa fabrication, **caractérisé en ce qu'**il met en oeuvre le dispositif selon l'une quelconque des revendications précédentes pour implémenter les étapes suivantes :
- une première étape (31) durant laquelle on applique sur un capteur de référence (22, 42) un signal d'excitation de façon à lui faire émettre une onde ultrasonore dans la cale de référence (23, 43) sur laquelle il est monté et on mesure l'amplitude de l'écho de référence reçu par ce capteur ;
- une seconde étape (32) durant laquelle on détermine la valeur de la commande de gain (25, 45) à appliquer à ce capteur (22, 42) pour obtenir un signal de référence d'une valeur d'amplitude sensiblement égale à une valeur de consigne ;
- une troisième étape (33) durant laquelle on affecte aux capteurs de mesures (21, 41) de même type que le capteur de référence considéré (22, 42) la commande de gain déterminée à l'étape précédente ;
Cette séquence de trois étapes étant exécutée, pour chacun des capteurs de référence (22, 42), au moins une fois pour chaque cycle (température, pression) du processus de fabrication de la pièce en matériau composite (11).

## Patentansprüche

1. Vorrichtung zur Selbstkalibrierung einer Einheit von Mess-Ultraschallsensoren (21, 41), die zur Kontrolle der Struktur eines Bauteils aus Verbundmaterial (11) während seiner Herstellung bestimmt sind, wobei die Vorrichtung eine Einheit von Bezugs-Ultraschallsensoren (22, 42) aufweist, die in der Nähe des Bauteils (11) in der gleichen Umgebung wie letzteres angeordnet sind, wobei jeder Bezugssensor auf einen Kalibrierungskeil (23, 43) montiert und konfiguriert ist, so betätigt zu werden, dass er eine Amplitudenmessung eines Bezugsechos durchführt, das aus einer Ultraschallwelle besteht, die vom Sensor emittiert wird und den Keil (23, 43) durchquert hat, auf den der Bezugssensor (22, 42) montiert ist, wobei diese Einheit mindestens einen Bezugssensor jedes der Typen von Messsensoren aufweist, die verwendet werden, um die Struktur des Bauteils (11) zu kontrollieren; **dadurch gekennzeichnet, dass** die Vorrichtung außerdem Einrichtungen aufweist, die konfiguriert sind, jeden der Bezugssensoren (22, 42) zu bestimmten Zeitpunkten während des Herstellungsprozesses des betrachteten Bauteils zu betätigen, die Messung der Amplitude des von diesem Sensor empfangenen Bezugsechos durchzuführen und den Wert der Verstärkungssteuerung (25, 45) zu bestimmen, die an diesen Sensor anzuwenden ist, um die Amplitude des Bezugsechos auf einem bestimmten Sollwert zu halten.

2. Vorrichtung nach Anspruch 1, **dadurch gekennzeichnet, dass** sie außerdem Einrichtungen (211) aufweist, die konfiguriert sind, an jeden der Messsensoren (21, 41) eine Verstärkungssteuerung (27, 47) anzuwenden, deren Wert vom Wert der bestimmten Verstärkungssteuerung (25, 45) für den Bezugssensor (22, 42) gleichen Typs wie der betrachtete Messsensor (21, 41) abhängt.

3. Vorrichtung nach Anspruch 2, **dadurch gekennzeichnet, dass** sie außerdem Einrichtungen aufweist, die konfiguriert sind, an jeden der Messsensoren (21, 41) eine Verstärkungssteuerung (27, 47) anzuwenden, deren Wert im Wesentlichen gleich dem Wert der für den Bezugssensor (22, 42) gleichen Typs wie der betrachtete Messsensor bestimmten Verstärkungssteuerung (25, 45) ist.

4. Vorrichtung nach einem der vorhergehenden Ansprüche, **dadurch gekennzeichnet, dass** die Keile (23, 43) aus einem Verbundmaterial gleich demjenigen hergestellt sind, das das Bauteil (11) formt, dessen Kontrolle die Einheit von Messsensoren (21, 41) durchführt.

5. Vorrichtung nach einem der Ansprüche 1 bis 3, **dadurch gekennzeichnet, dass** die Keile (23, 43) aus Siliciumkarbid oder Stahl hergestellt sind.

6. Vorrichtung nach einem der vorhergehenden Ansprüche, **dadurch gekennzeichnet, dass** jeder Bezugs-Ultraschallsensor (22, 42) auf einen getrennten Keil (23, 43) montiert ist.

7. Verfahren zur Selbstkalibrierung einer Einheit von Ultraschallsensoren, die für die Kontrolle der Struktur eines Bauteils aus Verbundmaterial (11) während seiner Herstellung bestimmt sind, **dadurch gekennzeichnet, dass** es die Vorrichtung nach einem der vorhergehenden Ansprüche verwendet, um die folgenden Schritte zu implementieren:
- einen ersten Schritt (31), während dessen an einen Bezugssensor (22, 42) ein Erregungssignal angelegt wird, um ihn eine Ultraschallwelle in den Bezugskeil (23, 43) emittieren zu lassen, auf den er montiert ist, und die Amplitude des von diesem Sensor empfangenen Bezugsechos gemessen wird;
- einen zweiten Schritt (32), während dessen der Wert der an diesen Sensor (22, 42) anzuwendenden Verstärkungssteuerung (25, 45) bestimmt wird, um ein Bezugssignal eines Amplitudenwerts im Wesentlichen gleich einem Sollwert zu erhalten;
- einen dritten Schritt (33), während dessen den Messsensoren (21, 41) gleichen Typs wie der betrachtete Bezugssensor (22, 42) die im vorhergehenden Schritt bestimmte Verstärkungssteuerung zugewiesen wird;
wobei diese Folge von drei Schritten für jeden der Bezugssensoren (22, 42) mindestens einmal für jeden Zyklus (Temperatur, Druck) des Herstellungsprozesses des Bauteils aus Verbundmaterial (11) ausgeführt wird.

## Claims

1. Device for the autocalibration of a set of ultrasonic measurement sensors (21, 41) intended to monitor the structure of a component made of composite material (11) during the manufacture thereof, the device including a set of ultrasonic reference sensors (22, 42) positioned close to the component (11) in the same environment as said component, each reference sensor being installed on a calibration chock (23, 43) and being configured so as to be actuated so as to perform an amplitude measurement of a reference echo formed by an ultrasonic wave emitted by the sensor and having passed through the chock (23, 43) on which the reference sensor (22, 42) is installed, this assembly including at least one reference sensor of each of the types of measurement sensor used to monitor the structure of said component (11); **characterized in that** the device furthermore includes means configured so as to actuate each of the reference sensors (22, 42) at given instants over the course of the process of manufacturing the component under consideration, perform the measurement of the amplitude of the reference echo received by this sensor and determine the value of the gain control (25, 45) to be applied to this sensor in order to keep the amplitude of the reference echo at a given setpoint value.

2. Device according to Claim 1, **characterized in that** it furthermore includes means (211) configured so as to apply, to each of the measurement sensors (21, 41), gain control (27, 47) the value of which depends on the value of the gain control (25, 45) determined for the reference sensor (22, 42) of the same type as the measurement sensor (21, 41) under consideration.

3. Device according to Claim 2, **characterized in that** it furthermore includes means configured so as to apply, to each of the measurement sensors (21, 41), gain control (27, 47) the value of which is substantially equal to the value of the gain control (25, 45) determined for the reference sensor (22, 42) of the same type as the measurement sensor under consideration.

4. Device according to any one of the preceding claims, **characterized in that** the chocks (23, 43) are made from a composite material identical to that forming the component (11) whose set of measurement sensors (21, 41) performs the monitoring.

5. Device according to any one of Claims 1 to 3, **characterized in that** the chocks (23, 43) are made of silicon carbide or steel.

6. Device according to any one of the preceding claims, **characterized in that** each ultrasonic reference sensor (22, 42) is installed on a separate chock (23, 43).

7. Method for the autocalibration of a set of ultrasonic sensors intended to monitor the structure of a component made of composite material (11) during the manufacture thereof, **characterized in that** it uses the device according to any one of the preceding claims in order to implement the following steps:
- a first step (31) during which an excitation signal is applied to a reference sensor (22, 42) so as to make it emit an ultrasonic wave into the reference chock (23, 43) on which it is installed, and the amplitude of the reference echo received by this sensor is measured;
- a second step (32) during which the value of the gain control (25, 45) to be applied to this sensor (22, 42) is determined in order to obtain a reference signal with an amplitude value substantially equal to a setpoint value;
- a third step (33) during which the gain control determined in the previous step is assigned to the measurement sensors (21, 41) of the same type as the reference sensor (22, 42) under consideration;
this sequence of three steps being executed, for each of the reference sensors (22, 42), at least once for each cycle (temperature, pressure) of the process of manufacturing the component made of composite material (11) .
